# EUROPÄISCHE PATENTANMELDUNG

(11) **EP 4 696 621 A1**
(43) Veröffentlichungstag der Anmeldung: **18.02.2026**
(21) Anmeldenummer: 25194280.1
(22) Anmeldetag: 06.08.2025
(51) Int. Cl.: B65G 1/04

(54) **BESCHICKUNGSFAHRZEUG FÜR EINE BLOCKLAGERANORDNUNG**

(30) Priorität: 12.08.2024 DE 102024122970
(71) Anmelder: Jungheinrich AG, 22047 Hamburg (DE)
(72) Erfinder: Morawietz, Timm, 66636 Tholey-Überroth (DE); Harting, Elmar, 63075 Offenbach (DE); Cavelius, Jörg, 61118 Bad Vilbel (DE)
(74) Vertreter: Keil & Schaafhausen Patentanwälte PartGmbB

(57) **Zusammenfassung**

Die vorliegende Erfindung betrifft ein Beschickungsfahrzeug (8) für eine Blocklageranordnung (16) mit mehreren Behälteraufnahmeräumen (17) zur Aufnahme eines Behälterstapels (3a) mit mindestens einem Behälter (3), wobei das Beschickungsfahrzeug (8) in einem Beschickungsraum (18) verfahrbar ist und eine Behälteraufnahme (2) für den mindestens einen Behälter (3) und eine Hubeinrichtung (4) aufweist.

Die Aufgabe der vorliegenden Erfindung ist es, ein leichtes Beschickungsfahrzeug (8) bereitzustellen.

Diese Aufgabe wird dadurch gelöst, dass die Behälteraufnahme (2) eine Momentenausgleichanordnung (1) aufweist, die mehrere voneinander beabstandete Federelemente (5) aufweist, die in Schwerkraftrichtung wirken.

## Beschreibung

Die vorliegende Erfindung betrifft ein Beschickungsfahrzeug für eine Blocklageranordnung mit mehreren Behälteraufnahmeräumen zur Aufnahme eines Behälterstapels mit mindestens einem Behälter, wobei das Beschickungsfahrzeug in einem Beschickungsraum verfahrbar ist und eine Behälteraufnahme für den mindestens einen Behälter und eine Hubeinrichtung aufweist.

Weiterhin betrifft die Erfindung eine Blocklageranordnung mit mehreren Behälteraufnahmeräumen, mindestens einem Behälter, einem unterhalb der Behälteraufnahmeräume angeordneten Beschickungsraum, wobei die Behälteraufnahmeräume zur Aufnahme von Behälterstapel ausgebildet sind, wobei in dem Beschickungsraum ein Beschickungsfahrzeug angeordnet ist.

In einer Blocklageranordnung, die auch als "Stapellageranordnung" bezeichnet wird, können Behälter in einer aufeinandergestapelten Form gelagert werden. Für jeden dieser Behälterstapel ist ein Behälteraufnahmeraum vorgesehen. Da die Behälter in einem Behälteraufnahmeraum aufeinander stehen, wird in Schwerkraftrichtung der zur Verfügung stehende Raum vollständig ausgenutzt. Die Behälteraufnahmeräume können auch relativ dicht benachbart angeordnet werden, so dass man auch quer zur Schwerkraftrichtung den zur Verfügung stehenden Raum sehr gut ausnutzen kann.

Der Behälteraufnahmeraum ist dazu ausgelegt, mindestens einen Behälter aufzunehmen, wobei mehrere Behälter einen Stapel von Behältern, auch Behälterstapel genannt, bilden. Der Behälterstapel wird von einer lösbaren Halteeinrichtung gehalten, wobei die Halteeinrichtung an dem untersten Behälter des Behälterstapels angreift und diesen hält.

Die Halteeinrichtung kann eine Halteposition und eine Freigabeposition einnehmen, wobei in der Halteposition der Behälterstapel gehalten wird. In der Freigabeposition können Behälter aus dem Behälteraufnahmeraum entnommen oder Behälter in den Behälteraufnahmeraum eingebracht werden.

Durch das Beschickungsfahrzeug (Shuttle, Hubwagen) können Behälter in einen Behälteraufnahmeraum eingebracht und aus einem Behälteraufnahmeraum entnommen werden. Um einen Behälter in einen Behälteraufnahmeraum einzuführen, weist das Beschickungsfahrzeug eine Hubeinrichtung auf, durch die der einzulagernde Behälter so lange angehoben wird, bis er an einem derzeit untersten Behälter eines Behälterstapels anliegt. Anschließend hebt das Beschickungsfahrzeug den einzubringenden Behälter samt aufliegendem Behälterstapel an. Dadurch kann die Halteeinrichtung in die Freigabeposition überführt werden und der einzuführende Behälter in den Behälteraufnahmeraum eingebracht werden. Sobald der einzubringende Behälter, der nun der neue unterste Behälter ist, an der Halteeinrichtung vorbeigeführt ist, wird die Halteeinrichtung in die Halteposition überführt und der komplette Behälterstapel wird auf die Halteeinrichtung abgesenkt. Zum Auslagern eines Behälters aus einem Behälterstapel hebt das Beschickungsfahrzeug mit Hilfe der Hubeinrichtung den kompletten Behälterstapel an, sodass die Halteeinrichtung aus der Halteposition in die Freigabeposition überführt werden kann. Nun senkt das Beschickungsfahrzeug den Behälterstapel an, bis der zu entnehmende Behälter an der Halteeinrichtung vorbei ist, um nun die Halteeinrichtung zurück in die Halteposition zu überführen. Während das Beschickungsfahrzeug den zu entnehmenden Behälter weiter absenkt, setzt der verbleibende Behälterstapel auf der Halteeinrichtung auf. Der zu entnehmende Behälter ist von dem Behälterstapel gelöst und kann durch den Beschickungsraum bewegt werden.

Das Beschickungsfahrzeug dient zur Aufnahme des gesamten Behälterstapelgewichtes (bis 750kg). Ein Kompaktlager soll so kompakt wie möglich gebaut werden. Daher sollten auch die Abmaße des Beschickungsfahrzeugs so klein wie möglich gehalten und das Hubwagenführungssystem so klein wie möglich ausgeführt werden. Hierzu wird ein Krafteinleitungspunkt des Hubantriebs so gewählt, dass er mit dem Lastschwerpunkt auf einer Achse liegt. Somit ist die Momentenbelastung auf das Führungssystem nur von einer Verschiebung des Massenschwerpunkts des Behälterstapels abhängig. Dieser ist aber aufgrund der Behältervielzahl in einem Stapel relativ gering. Aufgrund von Toleranzen kann es beim "Andocken" des Beschickungsfahrzeugs an den Behälterstapel zu einer anfänglichen Erstberührung / Krafteinleitung an nur einer Seite kommen. Diese Erstkraft entspricht zwar nur der "halben" Stapellast (die andere Seite liegt noch auf der Modulrahmenklappe auf), jedoch fehlt nun das "Gegenmoment". Dadurch wird die Momentenbelastung des gesamten Hubwagens erheblich erhöht.

Aufgabe der Erfindung ist es, ein System zu entwickeln, das diesen Lastfall entschärft ohne die Tragwerkskonstruktion /Führungseinheiten wesentlich zu versteifen.

Diese Aufgabe wird durch die Merkmale des Anspruchs 1 gelöst.

Dazu weist das Beschickungsfahrzeug eine Momentenausgleichsanordnung mit mehreren voneinander beabstandeten Federelementen auf, die in Schwerkraftrichtung wirken.

**In** der vorliegenden Anmeldung beschreiben Federelemente ein elastisches Bauteil, das sich unter Belastung gezielt verformt und bei Entlastung wieder zurückverformt und somit einen Energiespeicher darstellt. Beispiele für Federelemente sind beispielsweise Zugfedern, Druckfedern, Biegefedern, Tellerfedern, Torsionsfedern oder Gummifedern.

Durch die Federelemente kann sich die Behälteraufnahme an die Schrägstellung des Behälterstapels anpassen, sodass eine einseitige Belastung auf das Beschickungsfahrzeug, insbesondere die Hubeinrichtung, durch die Federkraft der Federelemente reduziert werden kann.

Die Behälteraufnahme kann mit der Hubeinrichtung des Beschickungsfahrzeuges über ein Gelenk verbunden sein, welches beispielsweise mittig in einer definierten Schwerpunktlage des Behälterstapels angeordnet ist. Das Gelenk ist optional.

Das Beschickungsfahrzeug hebt die Behälteraufnahme an, bis die Behälteraufnahme an einem schrägen Behälterstapel einseitig anliegt. Durch weiteres Anheben wird ein entsprechendes erstes, der weiter unten liegenden Seite des Behälterstapels zugeordnetes Federelement komprimiert, sodass das Beschickungsfahrzeug gegen die Federkraft des ersten Federelementes arbeitet. In diesem Zustand wirkt durch die Federkraft des ersten Federelementes ein Moment auf die Behälteraufnahme bzw. die Hubeinrichtung. Dieses Moment kann durch eine passende Auswahl des Federelementes eingestellt werden, um eine Überlastung der Hubeinrichtung zu vermeiden. Durch ein weiteres Anheben wird die Behälteraufnahme schräg gestellt und passt sich somit der Schrägstellung des Behälterstapels an bis ein zweites, der entgegengesetzten und aufgrund der Schrägstellung weiter oben liegenden Seite des Behälterstapels zugeordnetes Federelement belastet wird. Nun wirken das erste und das zweite Federelement auf die Behälteraufnahme bzw. die Hubeinrichtung. Hierbei wirken die entgegengesetzte Momente auf die Hubeinrichtung ausübenden Federkräfte des ersten und zweiten Federelementes gegeneinander und heben einander zumindest teilweise auf. Entsprechend wird das Moment bis zu einem gewissen Grad ausgeglichen. Schließlich geht das erste Federelement, das den Behälterstapel zuerst berührt hat, auf Block, sodass der Behälterstapel an dieser Seite angehoben wird. Durch weiteres Anheben wird auch das zweite Federelement beansprucht, bis dieses ebenfalls auf Block geht. Sobald beide Federelemente auf Block sind, ruht der komplette Behälterstapel auf dem Beschickungsfahrzeug und wird von den Halteeinrichtungen gelöst. Weiterhin hat der Behälterstapel eine Ausrichtung der Behälteraufnahme angenommen. Dadurch können ungünstige einseitige Belastungen des Beschickungsfahrzeuges, insbesondere der Behälteraufnahme vermieden werden.

Vorzugsweise sind die Federelemente in Eckbereichen der Behälteraufnahme angeordnet. Eckbereiche erstrecken sich ausgehend von einer Ecke entlang angrenzender Seiten einer Ecke, wobei 10-20%, vorzugsweise etwa 15% einer angrenzenden Seitenlänge der Seite dem Eckbereich zugeordnet sind. Entsprechend sind die Eckbereiche um 60-80% einer Seitenlänge voneinander beabstandet. Die Behälteraufnahme ist an die zu transportierenden Behälter angepasst, die im vorliegenden Fall rechteckig sind. Durch die Anordnung der Federelemente in den Eckbereichen wird eine gute Stabilität erreicht. Zusätzlich besteht die Möglichkeit, weitere Federelemente in weiteren Bereichen, beispielsweise an Längs- und Querseiten der rechteckigen Behälteraufnahme anzuordnen. Dies erlaubt eine gezielte Anpassung des zu kompensierenden Momentes an die tatsächlich vorliegenden Gegebenheiten.

Vorzugsweise beträgt ein Federweg der Federelemente 5 mm oder weniger, besonders bevorzugt 3 mm oder weniger. Nach diesem Federweg gehen die Federelemente auf Block, d.h. die Federelemente können nicht weiter komprimiert werden, sodass das Beschickungsfahrzeug seine maximale Hubkraft übertragen kann. Die Begrenzung des Federweges hängt von den vorliegenden Toleranzen des Blocklagers ab. Typischerweise werden die Halteelemente mit einer Toleranz in Schwerkraftrichtung von 3 mm montiert, sodass ein Federweg von 3 mm für diese Toleranzklasse ausreicht. Liegen jedoch andere Toleranzen vor, so kann der Federweg entsprechend angepasst werden. Wie bereits oben beschrieben, führt eine Schrägstellung des Behälters zu einer Neigung des Behälterstapels. Entsprechend besteht die Gefahr, dass ein oberster Behälter des Behälterstapels mit einer Begrenzung des Behälteraufnahmeraumes kollidiert, sodass die Toleranzen auf den vorliegenden Behälteraufnahmeraum angepasst werden sollten. Weiterhin erlaubt ein Federweg von 3 mm eine kompakte Momentenausgleichsanordnung und damit ein kompaktes Beschickungsfahrzeug.

Vorzugsweise weisen die Federelemente eine im Wesentlichen horizontale Federkennlinie auf, deren Federkraft sich entlang des Federweges um weniger als 10%, vorzugsweise weniger als 7,5%, besonders bevorzugt weniger als 5%, verändert. Dadurch wird erreicht, dass über alle Federelemente eine im Wesentlichen gleiche Federkraft unabhängig von der tatsächlichen Einfederung zur Verfügung steht, die zu einer gleichmäßigen Belastung des Beschickungsfahrzeuges, insbesondere der Hubeinrichtung führt.

Vorzugsweise sind die Federelemente unabhängig voneinander. Jedes der Federelemente kann einzeln belastet werden, ohne dabei die anderen Federelemente zu beeinflussen. Dadurch beeinträchtigt ein defektes Federelement die noch intakten Federelemente nicht. Das Beschickungsfahrzeug kann weiter (mit möglicherweise geminderter Leistung) agieren, ohne jedoch komplett auszufallen.

Vorzugsweise sind die Federelemente aus Tellerfedern, bevorzugt aus Tellerfederpaketen, gebildet. Tellerfeder können hohe Kräfte bei einem geringen Platzbedarf aufnehmen. Weiterhin können Tellerfeder zu Tellerfederpaketen zusammengesetzt werden, wodurch eine einfache Anpassung der Federkennlinie erreicht werden kann. Dies erlaubt eine flexible Anpassung an vorliegende Gegebenheiten.

Vorzugsweise sind die Federelemente vorgespannt. Die Federelemente sind so vorgespannt, dass ein resultierendes Moment aus dieser Vorspannkraft nicht zu einem Überschreiten eines maximalen zulässigen Momentes des Beschickungsfahrzeuges, insbesondere der Hubeinheit führt. Besonders bevorzugt ist hier eine möglichst hohe Vorspannkraft zu wählen, da diese Kraft die Höhe des maximalen Gegenmomentes bestimmt. Weiterhin kann durch die Vorspannung eine Federkraft der jeweiligen Federelemente eingestellt werden. Dies erlaubt, etwaige Toleranzen der eingesetzten Federn zu kompensieren.

Weiterhin wird die oben genannte Aufgabe durch eine Blocklageranordnung mit mehreren Behälteraufnahmeräumen, mindestens einem Behälter und einem unterhalb der Behälteraufnahmeräume angeordneten Beschickungsraum gelöst, wobei die Behälteraufnahmeräume zur Aufnahme von Behälterstapeln ausgebildet sind und wobei in dem Beschickungsraum ein Beschickungsfahrzeug angeordnet ist. Diese Blocklageranordnung weist ein erfindungsgemäßes Beschickungsfahrzeug mit einer oben beschriebenen Momentenausgleichsanordnung auf.

Durch das oben beschriebene Beschickungsfahrzeug mit der Momentenausgleichsanordnung kann die Konstruktion des Beschickungsfahrzeuges insbesondere der Hubeinrichtung leicht gestaltet werden, da etwaige Überbeanspruchungen bei einem schiefen Behälterstapel durch die Momentenausgleichsanordnung kompensiert werden. Dies resultiert in einem geringen Verschleiß und somit einer langen Lebensdauer des Beschickungsfahrzeugs, insbesondere dessen Hubeinheit. Weiterhin kann die Blocklageranordnung einfach und zeiteffizient montiert werden, da die Momentenausgleichsanordnung Toleranzen der in einem Beschickungsraum angeordneten Halteeinrichtungen ausgleichen kann.

Im Folgenden wird die Erfindung anhand eines bevorzugten Ausführungsbeispiels in Verbindung mit der Zeichnung gezeigt. Hierin zeigen:
Fig. 1 eine schematische Darstellung eines ersten Zustandes einer Momentenausgleichsanordnung;
Fig. 2 eine schematische Darstellung eines zweiten Zustandes einer Momentenausgleichsanordnung;
Fig. 3 eine schematische Darstellung eines dritten Zustandes einer Momentenausgleichsanordnung;
Fig. 4 eine schematische Darstellung eines oberen Bereichs eines Beschickungsfahrzeugs;
Fig. 5 eine schematische Darstellung eines Teils einer Hubeinrichtung mit einer Behälteraufnahme;
Fig. 6 eine vergrößerte Ansicht eines erfindungsgemäßen Federelementes;
Fig. 7 eine schematische Darstellung einer Blocklageranordnung.

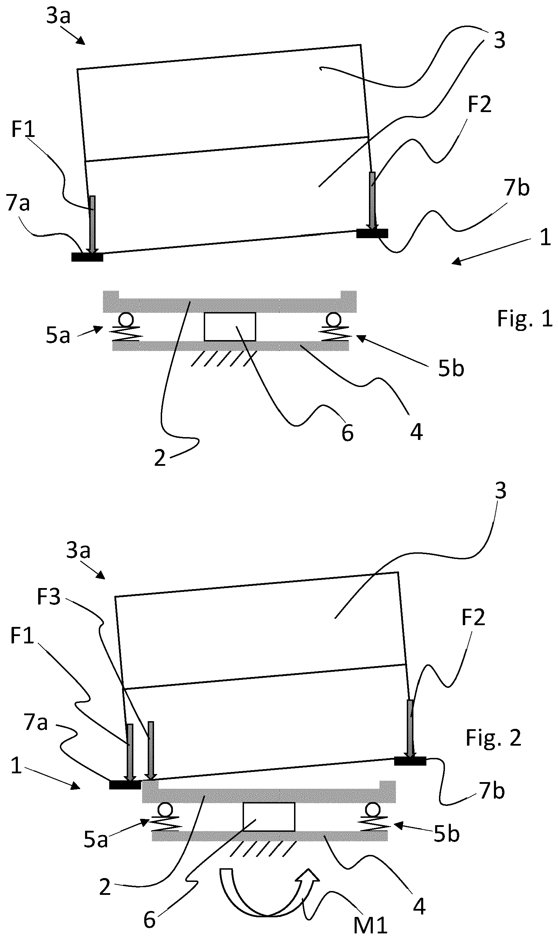

Fig. 1 zeigt einen ersten Zustand einer Momentenausgleichsanordnung 1. **In** diesem Zustand sind eine Behälteraufnahme 2 und ein unterster Behälter 3 eines Behälterstapel 3a voneinander beabstandet. Zwischen der Behälteraufnahme 2 und einer Hubeinheit 4 sind Federelemente 5a, 5b vorgesehen, wobei die Behälteraufnahme 2 und die Hubeinheit 4 vorzugsweise durch eine gelenkige Anbindung 6 miteinander verbunden sind.

Der in Fig. 1 dargestellte Behälterstapel 3a wird durch eine erste Halteeinrichtung 7a und eine zweite Halteeinrichtung 7b eines nicht gezeigten Behälteraufnahmeraums gehalten. Die Halteeinrichtungen 7a, 7b weisen einen Versatz zueinander auf, wobei dieser Versatz in Schwerkraftrichtung vorliegt. Dadurch steht der Behälterstapel 3a leicht schräg.

Der schräge Behälterstapel 3a wirkt durch eine erste Kraft F1 auf die erste Halteeinrichtung 7a und durch eine zweite Kraft F2 auf die zweite Halteeinrichtung 7b. Die erste und die zweite Kraft F1, F2 unterscheiden sich voneinander. Die erste Kraft F1 beträgt bspw. 4675 N und die zweite Kraft F2 beträgt bspw. 2825 N. in diesem Fall besteht ein Kräfteunterschied von 2200 N zwischen F1 und F2.

In dem in Fig. 1 dargestellten Zustand ruht das Gewicht des Behälterstapels 3 komplett auf den Halteeinrichtungen 7a, 7b.

In Fig. 2 ist ein zweiter Zustand der Momentenausgleichsanordnung 1 dargestellt. In diesem Zustand verteilt sich das Gewicht des Behälterstapels 3a auf die beiden Halteeinrichtungen 7a, 7b und auf die Momentenausgleichsanordnung 1. Die erste Halteinrichtung 7a und eine linke Seite der Momentenausgleichsanordnung 1 tragen zusammen ein in Schwerkraftrichtung tiefere Seite des Behälterstapels 3a (linke Seite), während die zweite Halteinrichtung 7b eine in Schwerkraftrichtung höhere (rechte) Seite des Behälterstapels 3a trägt.

In dem zweiten Zustand ist die Behälteraufnahme 2 noch nicht an die Schrägstellung des Behälterstapels 3a angepasst. Jedoch trägt die Momentenausgleichsanordnung 1 bereits einen Teil des Gewichts des Behälterstapels 3a, wobei eine dritte Kraft F3 auf die Momentenausgleichsanordnung 1 wirkt. Die dritte Kraft F3 wird durch die Vorspannkraft des entsprechenden Federelementes 5a definiert. Im vorliegenden Fall beträgt die dritte Kraft F3 bspw. 2200 N. Somit wird die erste Kraft F1 die auf die erste Halteeinrichtung 7a wirkt um 2200 N auf eine neue erste Kraft F1 von 2475 N reduziert. Die zweite Kraft F2 verbleibt unverändert bei 2825 N. Noch ist keines der beiden Federelemente 5a, 5b eingefedert.

Durch die dritte Kraft F3 wird ein Moment M1 erzeugt. Entsprechend kann dieses Moment M1 durch die Auswahl der Vorspannkraft des Federelementes 5a eingestellt werden.

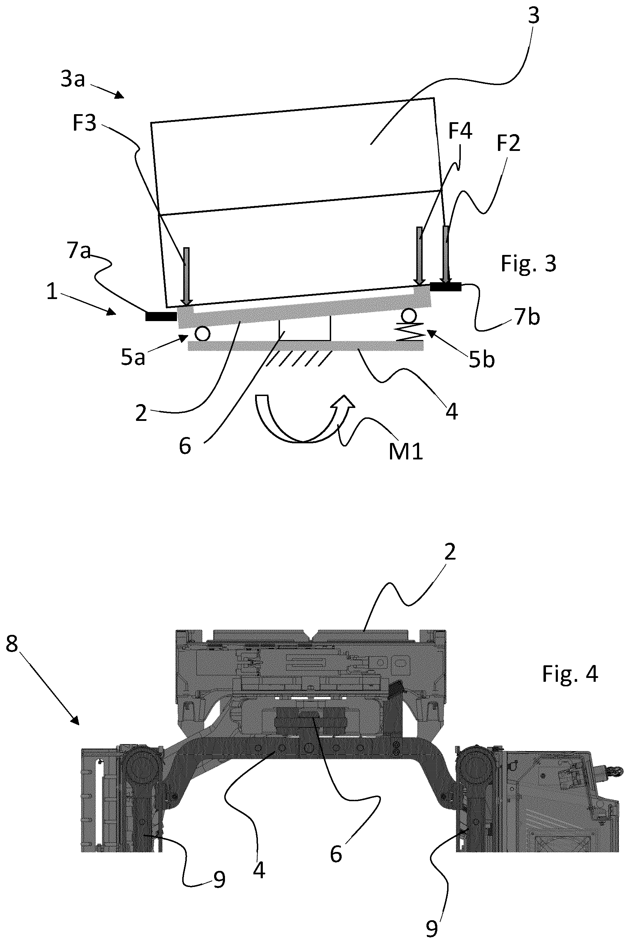

Fig. 3 zeigt einen dritten Zustand der Momentenausgleichsanordnung 1. Das linke Federelement 5a ist komplett eingefedert und "auf Block". Damit trägt die linke Seite der Behälteraufnahme 2 vollständig die linke Seite des Behälterstapels 3a, sodass die dritte Kraft F3 nun 4675 N beträgt. Der Federweg der linken Feder 5a beträgt bspw. 3mm und wurde überwunden. Die rechte Seite der Behälteraufnahme 2 ist mit der rechten Seite des Behälterstapels 3a in Kontakt und überträgt bereits eine vierte Kraft F4 in Hohe von bspw. 2200 N (Vorspannkraft der zweiten Feder 5b) auf die Momentenausgleichsanordnung 1. Es verbleiben 625 N als zweite Kraft F2 auf der zweiten Halteeinrichtung 7b. Aus der dritten und der vierten Kraft F3, F4 ergibt sich das vorliegende Moment M1. Hierbei wirken die dritte und die vierte Kraft F3, F4 gegeneinander, sodass sich das Moment M1 reduziert.

Bei einem in Fig. 1 bis 3 nicht gezeigten Beschickungsfahrzeug 8 ohne eine erfindungsgemäße Momentenausgleichsanordnung 1 ergibt sich das Moment M1 im dritten Zustand ausschließlich durch die Kraft F3, da hierbei keine Kompensation durch eine weitere Kraft vorliegt. Die erfindungsgemäße Momentenausgleichsanordnung 1 ermöglicht somit eine zumindest teilweise Kompensation einer Kraft, die aus einem schrägen Behälterstapel 3a auf ein Beschickungsfahrzeug, insbesondere dessen Hubeinrichtung 4, wirkt.

Ausgehend vom dritten Zustand hebt das Beschickungsfahrzeug 8 den Behälterstapel 3a weiter an, sodass auch das zweite Federelement 5b auf Block geht. Der Behälterstapel 3a ist nun an der Hubeinrichtung 4 ausgerichtet, wobei das Moment M1 nun nur noch von einem ggf. vorliegenden außermittigen Schwerpunkt des Behälterstapels 3a ausgeht.

Während des Anhebens des Behälterstapels 3a wirkt ein maximales Moment auf die Hubeinrichtung 4 bzw. das Beschickungsfahrzeug 8. Dieses maximale Moment wird durch die Federkraft der Federelemente 5a, 5b bestimmt. Entsprechend kann das Beschickungsfahrzeug 8 bzw. dessen Hubeinrichtung 4 an dieses Moment angepasst werden.

Fig. 4 zeigt einen oberen Bereich eines Beschickungsfahrzeugs 8 mit einer nicht gezeigten Momentenausgleichsanordnung 1, einer Behälteraufnahme 2 und einer Hubeinrichtung 4. Die Hubeinrichtung 4 weist eine Antriebs- und Führungseinheit 9 auf, wodurch die Hubeinrichtung 4 geführt und in Schwerkraftrichtung bewegt wird.

Die Antriebs- und Führungseinheit 9 bewegt und führt die Hubeinrichtung 4 entlang der Schwerkraftrichtung. Bei einer schrägen Belastung der Hubeinrichtung 4 wird die Antriebs- und Führungseinheit 9 entsprechend ungleichmäßig belastet. Durch die Momentenausgleichsanordnung 1 kann die ungleichmäßige Belastung begrenzt werden, sodass eine ungleichmäßige Belastung der Antriebs- und Führungseinheit 9 ebenfalls begrenzt wird.

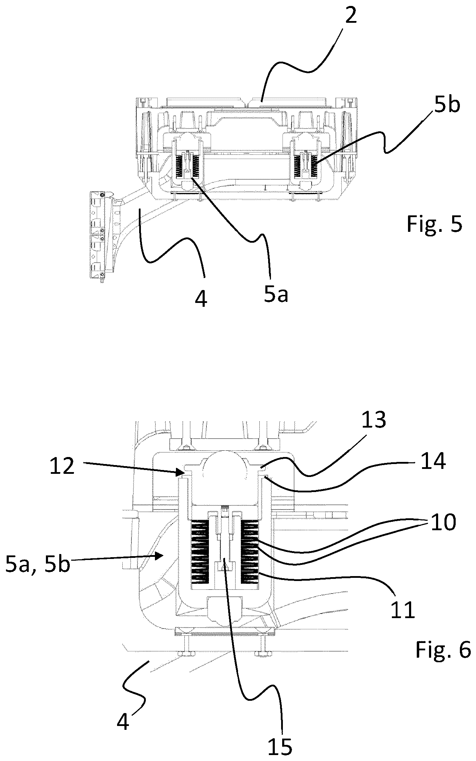

Fig. 5 zeigt eine schematische Darstellung der Momentenausgleichsanordnung 1, der Behälteraufnahme 2 und der Hubeinrichtung 4. Die Momentenausgleichsanordnung 1 wird in diesem Beispiel durch die Federelemente 5a, 5b gebildet. Die Federelemente 5a, 5b sind in Fig. 6 genauer gezeigt. Die Federelemente 5a, 5b sind bei diesem Ausführungsbeispiel aus Tellerfedern 10 zusammengesetzt, die ein Tellerfederpaket bilden. Die Tellerfedern 10 bzw. das Tellerfederpaket ist in einer Gleitführung 11 angeordnet. Weiterhin weisen die Federelemente 5a, 5b eine Federwegbegrenzung 12 auf. Im vorliegenden Ausführungsbeispiel ist die Federwegbegrenzung 12 durch eine Schulter 13 und einen Anschlag 14 ausgebildet, wobei die Schulter 13 beim Erreichen des maximalen Federweges an dem Anschlag 14 anliegt. Weiterhin weisen die Federelemente 5a, 5b ein Mittel 15 zur Einstellung der Vorspannkraft auf. Dieses Mittel 15 ist im vorliegenden Beispiel als Schraube 15 ausgebildet. Durch ein Anziehen der Schraube 15 wird die Vorspannkraft erhöht.

Das vorliegenden Ausführungsbeispiel zeigt eine Momentenausgleichsanordnung 1 mit zwei Federelementen 5a, 5b. In komplexeren Anordnungen kann die Momentenausgleichsanordnung 1 mehr als zwei Federelemente 5a, 5b aufweisen, beispielsweise vier, sechs oder acht Federelemente 5a, 5b.

Je nach Form der Behälteraufnahme 2 sind die Federelemente 5a, 5b in Eckbereichen der Behälteraufnahme 2 angeordnet. Bei einer rechteckigen Behälteraufnahme 2 ist beispielsweise in jedem der vier Eckbereiche wenigstens ein Federelement 5a, 5b angeordnet.

Die Federelemente 5a, 5b weisen eine Federkennlinie auf. Die Federkennlinie ist dadurch geprägt, dass sie fast horizontal ist. Das bedeutet, dass sich die Federkraft über den Federweg um weniger als 10%, vorzugsweise weniger als 7,5%, besonders bevorzugt weniger als 5% erhöht. Dadurch steht bereits zu Beginn eines Kontaktes zwischen der Behälteraufnahme 2 und einer Seite des Behälterstapel 3a eine fast maximale Kraft (weniger als 10%, 7,5% oder 5% unterhalb der Maximalkraft) zur Verfügung, durch die ein Moment ausgeglichen werden kann. Somit wird direkt bei Beginn eine merkliche Reduktion des auf die Hubeinrichtung 4 wirkenden Moments erreicht.

Die Federelemente 5a, 5b arbeiten vorzugsweise unabhängig voneinander. D.h. die Federelemente 5a, 5b beeinflussen sich lediglich indirekt durch eine Schrägstellung der Behälteraufnahme 2 gegenseitig. Dies erlaubt, dass bei einem Defekt eines der Federelemente 5a, 5b das andere Federelement 5a, 5b weiterhin funktioniert.

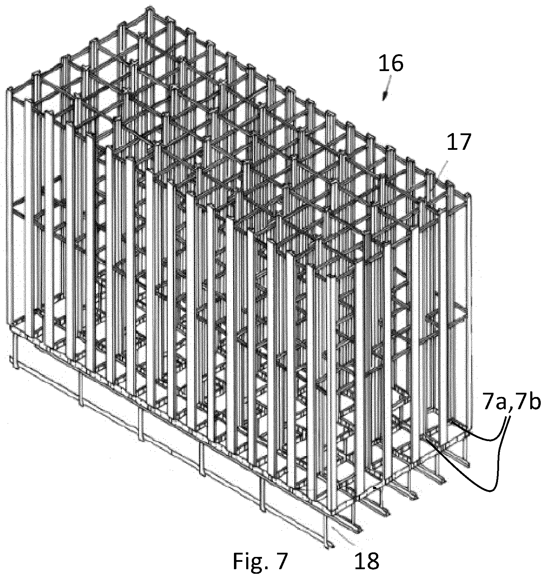

Fig. 7 zeigt ein Blocklager 16 mit einer Vielzahl von Behälteraufnahmeräumen 17, die in Reihen und Spalten angeordnet sind. Unterhalb der Behälteraufnahmeräume 17 ist ein Beschickungsraum 18 angeordnet, in dem wenigstens ein erfindungsgemäßes Beschickungsfahrzeug 8 bewegbar angeordnet ist. Durch das Beschickungsfahrzeug 8 können Behälter in einen Behälteraufnahmeraum 17 eingelagert und aus einem Behälteraufnahmeraum 17 entnommen werden.

Zum Einlagern eines Behälters 3 in einen Behälteraufnahmeraum 17 wird das Beschickungsfahrzeug 8 unterhalb eines entsprechenden Behälteraufnahmeraumes 17 positioniert. Dort hebt das Beschickungsfahrzeug 8 den Behälter 3 durch die Hubeinrichtung 4 in Kombination mit der Antriebs- und Führungseinheit 9 an, bis der Behälter 3 an einem im Behälteraufnahmeraum 17 angeordneten Behälterstapel 3a anliegt. Anschließend hebt das Beschickungsfahrzeug 8 den einzulagernden Behälter 3 zusammen mit dem im Behälteraufnahmeraum 17 angeordneten Behälterstapel 3a an, sodass Halteeinrichtungen 7a, 7b von einer Halteposition (in der der Behälterstapel 3a gehalten wird) in eine Freigabeposition überführt werden. In der Freigabeposition kann der einzulagernde Behälter 3 an der Halteeinrichtung 7a, 7b vorbei in den Behälteraufnahmeraum 17 eingeführt werden. Sobald der einzulagernde Behälter 3 an der Halteeinrichtung 7a, 7b vorbei ist, wird die Halteeinrichtung 7a, 7b in die Halteposition überführt und der Behälterstapel 3a auf die Halteeinrichtung 7a, 7b abgesenkt. Die Hubeinrichtung 4 kann in eine Transportposition überführt werden, sodass das Beschickungsfahrzeug 8 im Beschickungsraum 18 verfahren kann.

Zur Auslagerung eines Behälters 3 positioniert sich das Beschickungsfahrzeug 8 unter einem entsprechenden Behälteraufnahmeraum 17 und hebt den Behälterstapel 3a an. Dadurch wird die Halteeinrichtung 7a, 7b freigegeben und kann in die Freigabeposition überführt werden. Nun kann der auszulagernde Behälter 3 an der Halteeinrichtung 7a, 7b vorbei abgesenkt werden. Sobald der auszulagernde Behälter 3 abgesenkt wurde, wird die Halteeinrichtung 7a, 7b in die Halteposition überführt und der verbleibende Teil des Behälterstapels 3a auf die Halteeinrichtung 7a, 7b abgesenkt. Das Beschickungsfahrzeug 8 kann den so entnommenen Behälter 3 durch den Beschickungsraum 18 transportieren.

## Patentansprüche

1. Beschickungsfahrzeug (8) für eine Blocklageranordnung (16) mit mehreren Behälteraufnahmeräumen (17) zur Aufnahme eines Behälterstapels (3a) mit mindestens einem Behälter (3), wobei das Beschickungsfahrzeug (8) in einem Beschickungsraum (18) verfahrbar ist, und eine Behälteraufnahme (2) für den mindestens einen Behälter (3) und eine Hubeinrichtung (4) aufweist, **dadurch gekennzeichnet, dass** die Behälteraufnahme (2) eine Momentenausgleichanordnung (1) aufweist, die mehrere voneinander beabstandete Federelemente (5) aufweist, die in Schwerkraftrichtung wirken.

2. Beschickungsfahrzeug (8) nach Anspruch 1, **dadurch gekennzeichnet, dass** die Federelemente (5) in Eckbereichen der Behälteraufnahme (2) angeordnet sind.

3. Beschickungsfahrzeug (8) nach Anspruch 1 oder 2, **dadurch gekennzeichnet, dass** ein Federweg der Federelemente (5) 3 mm oder weniger beträgt.

4. Beschickungsfahrzeug (8) nach Anspruch 3, **dadurch gekennzeichnet, dass** die Federelemente (5) eine Federkennlinie aufweisen, deren Federkraft sich entlang des Federweges um weniger als 10%, vorzugsweise weniger als 7,5%, besonders bevorzugt weniger als 5%, verändert.

5. Beschickungsfahrzeug (8) nach einem der Ansprüche 1 bis 4, **dadurch gekennzeichnet, dass** die Federelemente (5) unabhängig voneinander sind.

6. Beschickungsfahrzeug (8) nach einem der Ansprüche 1 bis 5, **dadurch gekennzeichnet, dass** die Federelemente (5) aus Tellerfedern, bevorzugt aus Tellerfederpaketen, gebildet sind.

7. Beschickungsfahrzeug (8) nach einem der Ansprüche 1 bis 6, **dadurch gekennzeichnet, dass** die Federelemente (5) vorgespannt sind.

8. Blocklageranordnung (16) mit mehreren Behälteraufnahmeräumen (17), mindestens einem Behälter (3) und einem unterhalb der Behälteraufnahmeräume (17) angeordneten Beschickungsraum (18), wobei die Behälteraufnahmeräume (17) zur Aufnahme von Behälterstapel (3a) ausgebildet sind, **dadurch gekennzeichnet, dass** in dem Beschickungsraum (18) ein Beschickungsfahrzeug (8) nach einem der Ansprüche 1 bis 7 angeordnet ist.
